# EUROPEAN PATENT SPECIFICATION

(11) **EP 0 323 128 B1**
(45) Date of publication and mention of the grant of the patent: **03.08.1994**
(21) Application number: 88312159.2
(22) Date of filing: 21.12.1988
(51) Int. Cl.: B29C 65/02, B65D 65/38, B31B 1/64

(54) **Food packaging bag having excellent aroma retention**
Verpackungsbeutel für Nahrungsmittel mit sehr gutem Aromatrückhaltevermögen
Sac pour l'emballage de nourriture ayant une excellente rétention d'arôme

(30) Priority: 28.12.1987 JP 335858/87
(43) Date of publication of application: 05.07.1989
(73) Proprietor: POLYPLASTICS CO. LTD., Higashi-ku Osaka-shi Osaka (JP)
(72) Inventor: Nezu, Shigeru, Fuji-shi Shizuoka (JP); Taniguchi, Kotaro, Nagaokakyo-shi Kyoto (JP); Konishi, Toshio, Sakai-shi Osaka (JP)
(74) Representative: Jackson, Peter

(56) References cited:
- EP-A- 0 095 995
- EP-A- 0 299 643
- PATENT ABSTRACTS OF JAPAN, vol. 1, section C, 8th July 1977;& JP-A-52 032 078 (MITSUI SEKIYU KAGAKU KOGYO K.K.) 03-10-1977
- K. STOECKHERT: "Kunstoff lexicon", 7th edition 1980, page 374, Hanser Verlag,Munich, DE
- H. SAECHTING: "International plastics handbook", 1983, pages 221-261, HanserVerlag, Munich, DE

## Description

The present invention relates to a polyalkylene terephthalate food packaging having excellent aroma retention,.

Polyalkylene terephthalate films have been widely used as packaging materials. For example EP-A-0 095 995 describes the manufacture of a wrinkle-free amorphous unoriented polyester film which is produced by an extrusion blowing process. The specification teaches in particular the use of polyethylene terephthalate film as a heat sealable wrapping, but is wholly silent as to the problem of aroma retention and thus does not address the problem met by the present invention.

In order to form a expansible container especially for containing popcorn before and during the "popping" process, EP-A-0 299 643 proposes a method of packaging comprising the steps of of forming a bag portion from a film of heat extensible plastics material, for example of polyethylene terephthalate, polybutylene terephthalate, polycarbonate or polypropylene, bringing the mouth of said bag portion into contact with the mouth of a rigid container containing a heat-transformable food product such as unpopped corn, collapsing said bag portion by drawing a vacuum between the interiors of said container and said bag portion or by external pressure thereon to cause the bag portion substantially to follow the interior contour of the container and food product therein, and sealing the mouth of the bag portion to the mouth of the container. The material of choice for forming th bag portion, i.e. that referred to in the specific examples is polyethylene terephthalate.

H. Saechting in "International Plastics Handbook" (1983, München, Hanser Verlag) discusses polyalkylene terephthalates such as polyethylene terephthalate and polybutylene terephthalate at some length, and refers in particular to the aroma retention properties of the former. K. Stoeckhert in "Kunststoff Lexicon" from the same publisher also refers to polyalkylene terephthalates.

In JP-A-52-032078, Mitsui Sekiyu Kagaku Kogyo K.K. propose a thermoplastics laminate formed by co-extrusion of a polyolefin grafted with unsaturated carboxylic acids and polybutylene terephthalate which may be used in food packaging.

Thus table luxuries such as tea and coffee, sweet stuffs such as chocolates and cookies and pickles such as pickled radishes and Korean pickles are usually packed in bags made of a composite film. The composite film is used here because a monolayered film has only poor heat sealability, though it is excellent in aroma retention, so that it is difficult to form a bag. The monolayered film is thus combined with a film having an excellent heat sealability. However, the lamination of the films is economically disadvantageous, since the productivity is poor. Further the laminated films are peeled off in some cases. The composite films are thus unsuitable for use as packaging materials. In making bags from such a composite film, a film having an excellent heat sealability such as that of an olefin, e.g. polyethylene or polypropylene, is used as an inner layer of the bag to be brought into contact with the food. However, such a film has a smell peculiar to the resin, thus impairing the aroma of the contents of the bag.

Known aroma-retentive films usable herein include, for example, nylon, ethylene/vinyl acetate copolymer and polyacrylonitrile. However, they cannot be shaped into film by an inexpensive inflation method but by an expensive T-die method.

It is an object of this invention to provide a simple and economical food packaging bag having excellent aroma retention.

After investigations made for the purpose of solving this problem, the inventors have found that a polybutylene terephthalate resin film can retain aroma and is heat-sealable and, therefore, it is usable as a quite excellent material for food packaging bags. The inventors have further found that films can be produced from polybutylene terephthalate by the inflation method in an economically advantageous manner when the quality of the resin and the film-forming conditions are suitably selected and that the film thus formed has a sufficient strength even though it comprises a single layer. The present invention has been completed on the basis of these findings.

The above object is attained according to the invention by a polyalkylene terephthalate food packaging having excellent aroma retention, characterised in that such packaging is prepared by heat-sealing a monolayered polybutylene terephthalate resin film to form a bag.

The polybutylene terephthalate used in the present invention is a polyester produced by condensing 1,4-butanediol with terephthalic acid or its ester with a lower alcohol. It may also be a copolymer mainly comprising polybutylene terephthalate.

Known additives usually added to thermoplastic or thermosetting resins can be suitably added to the polybutylene terephthalate resin for satisfying the properties required thereof. Furthermore small amounts of other thermoplastic resins and inorganic fillers can be incorporated therein depending on the use so far as the effect of the present invention is not inhibited.

The inflation method is usually employed in the formation of polyethylene films. This method comprises extruding a plastic material through an annular nozzle of an extrusion molding machine to form a tube and blowing a fluid such as air into the tube to form a tubular film. The T-die method comprises extruding a plastic material through a linear slit of an extrusion-molding nozzle to form a film. The productivity in the inflation method is far higher than that in the T-die method. However, the resin materials usable in the inflation method are limited and polybutylene terephthalate resin has been thought to be unusable in this method. However, the inventors have found that a specific polybutylene terephthalate resin having a relatively high viscosity, i.e. an intrinsic viscosity of at least 1.0, can be formed into a film by the inflation method and that the film thus produced has characteristic physical properties as compared with plastic films mass-produced in the prior art.

The standard inflation conditions are as follows: the extruded tubular film is taken off at a speed of 10 to 50 m/min while keeping the temperature of the resin to be extruded at a point by 20 to 30°C higher than the melting point thereof and the diameter of the tube is expanded 1- to 5-fold with air. When the take-off speed is below the above-described range, the temperature of the resin to be extruded is preferably set below the above range similarly and, on the contrary, when the temperature of the resin to be extruded is above that range, the take-off speed is preferably set above the above-described range similarly.

However, when the polybutylene terephthalate resin used has an intrinsic viscosity less than 1.0, no film can be formed under any inflation conditions. When a polybutylene terephthalate resin having an intrinsic viscosity less than 1.0 must be used from the viewpoint of the physical properties, a film can be formed therefrom by the T-die method.

The film thus formed can be monoaxially or biaxially oriented to any degree, if necessary.

The polybutylene terephthalate resin film thus produced is suitable for use as a packaging film for foods the aroma of which must be retained, such as table luxuries, e.g. tea and coffee, sweet stuffs, e.g., chocolates and cookies and pickles, e.g., Korean pickles and pickled radishes.

The inner layer of an ordinary food packaging bag made of an aroma-retentive composite film usually comprises a film of a polyolefin such as polyethylene or polypropylene having an excellent heat sealability. However, this film has a smell peculiar to the resin to spoil the aroma of the food.

The polybutylene terephthalate resin film used in the present invention has no peculiar smell and is tasteless and, therefore, it has no problem of spoiling the aroma or taste of foods.

The polybutylene terephthalate resin film is usable as the monolayered film, because it has excellent heat-sealability, adaptability to printing and mechanical strengths suitable for the food packaging bags. Further a transparent polybutylene terephthalate resin film can be obtained by selecting the process for the production thereof. The film is, therefore, suitable as a packaging material.

Films usually used as sealants have a low mechanical strength in the heat-sealed portion and the bags produced therefrom tend to be broken in this portion. In addition, the strength of the films per se is insufficient and, therefore, they must have an increased thickness.

On the other hand, the polybutylene terephthalate resin films are not broken in the heat-sealed portion because they have a high mechanical strength. The bags made of them are not easily broken during the transportation or handling. In addition, the films per se are tough and, therefore, thin films of them can be used economically advantageously.

For example, the polybutylene terephthalate resin films formed by the inflation method have a tensile strength 2 or 3 times higher than that of low-density polyethylene or polypropylene film formed by the same method and, in addition, the tear strength and impact strength of the former are superior to those of the latter.

Although films superior to the polybutylene terephthalate resin films with respect to only the aroma retention are available, they are expensive because the resins per se are expensive or the resins cannot be formed into film by the inflation method. Other problems of them are that they must be laminated with another film in order to impart a heat-sealability thereto as required in the bag-making step so that the productivity thereof is low and the laminated films will be peeled off. On the contrary, the polybutylene terephthalate resin film used in the present invention can be produced by the inflation method and it has excellent characteristics even when it is used as a monolayered film. Inexpensive food packaging bags and a superior productivity can thus be obtained.

### [Effect of the Invention]

As described above, the food packaging bags made of the polybutylene terephthalate resin film of the present invention have an excellent aroma retention and are tasteless and free of smell unlike polyethylene or polypropylene resin films. The foods in the package will have no lingering smell from the bags and the bags do not spoil the aroma of the foods, which is the most important requisite of food packaging material. Further the polybutylene terephthalate resin film used in the present invention can be formed by the inflation method and heat-sealed. Another advantage of the film is that since this monolayered film has excellent characteristics, economically advantageous food packaging bags can be produced with a high productivity.

### [Examples]

The following Examples will further illustrate the present invention, which by no means limit the present invention.

### Example 1

A film was formed from a polybutylene terephthalate resin having an intrinsic viscosity of 1.4 and a melting point of 228°C by the inflation method under the following conditions: a tubular film was formed by extrusion with a 50 mm extrusion molding machine while the die lip distance of 1 mm and the resin temperature of 260 to 265°C were kept. The film was stretched at a blow ratio of 1.5 and a rate of pulling of 40 m/min to obtain a tubular film having a thickness of 30 µm and a diameter of 20 cm. The tubular film was cut into pieces having a length of 20 cm. One cut edge of each piece was heat-sealed with an impulse sealer to form a bag. Commercially available tea, coffee or solidified curry paste was packed in the bag and the opening of the bag was sealed with the impulse sealer.

The bags were placed in a glass desiccator in an air-conditioned room at 23°C and 50 % RH. The desiccator was opened at intervals to determine the time elapsed until the aroma of the contents of each bag was first recognized. The degree of permeation of the aroma through the bag was thus determined. No aroma permeated even after 20 days or longer as shown in Table 1. The aroma of the contents of the bag was unchanged and no smell of the packaging material spoiled it.

### Comparative Example 1

A tubular film having a thickness of 30 µm and a diameter of 20 cm was formed under the same conditions as those of Example 1 except that a low-density polyethylene resin (LDPE) having a melt index of 0.4 was used. The tubular film was cut into pieces having a length of 20 cm. One cut edge of each piece was heat-sealed with an impulse sealer to form a bag.

Commercially available tea, coffee or solidified curry paste was packed in the bag and the opening of the bag was sealed with the impulse sealer in the same manner as that of Example 1.

The degree of the permeation of the aroma through the bag was determined in the same manner as that of Example 1. The aroma permeated the bag within one hour in all the cases as shown in Table 1.

**Table 1**

| | Film | Thickness (µm) | Time elapsed until the aroma was first recognized | | |
|---|---|---|---|---|---|
| | | | Tea | Coffee | Curry |
| Example 1 | PBT | 30 | 40 days | 20 days | 32 days |
| Comp. Ex.1 | LDPE | 30 | 20 min | 10 min | 10 min |

## Claims

1. A polyalkylene terephthalate food packaging having excellent aroma retention, characterised in that such packaging is prepared by heat-sealing a monolayered polybutylene terephthalate resin film to form a bag.

2. A food packaging bag according to claim 1, wherein the polybutylene terephthalate resin has an intrinsic viscosity of at least 1.0.

3. A food packaging bag according to claim 1 or 2, wherein the polybutylene terephthalate resin film is one formed by the inflation method.

## Patentansprüche

1. Polyalkylenterephthalat-Nahrungsmittelverpackung mit ausgezeichnetem Aromarückhaltevermögen, dadurch gekennzeichnet, daß eine derartige Verpackung durch Heißversiegeln einer Monoschicht einer Polybutylenterephthalatharz-Folie unter Ausbildung eines Beutels hergestellt wird.

2. Nahrungsmittel-Verpackungsbeutel gemäß Anspruch 1, worin das Polybutylenterephthalat-Harz eine Grenzviskosität von wenigstens 1,0 hat.

3. Nahrungsmittel-Verpackungsbeutel gemäß Anspruch 1 oder 2, worin die Polybutylenterephthalatharz-Folie nach dem Aufblasverfahren hergestellt wird.

## Revendications

1. Un emballage pour aliments en polytéréphtalate d'alkylène ayant d'excellentes propriétés de rétention des arômes, caractérisé en ce qu'il est préparé en thermoscellant une pellicule monocouche de résine de polytéréphtalate de butylène pour former un sac.

2. Un sac d'emballage d'aliments selon la revendication 1, dans lequel la résine de polytéréphtalate de butylène a une viscosité intrinsèque d'au moins 1,0.

3. Un sac d'emballage d'aliments selon la revendication 1 ou 2, dans lequel la pellicule de résine de polytéréphtalate de butylène est une pellicule formée par le procédé par soufflage.
